Europäisches Patentamt

European Patent Office

Office européen des brevets

(19)

(11) Veröffentlichungsnummer : **0 333 700 B1**

(12) **EUROPÄISCHE PATENTSCHRIFT**

(45) Veröffentlichungstag der Patentschrift :
**02.11.94 Patentblatt 94/44**

(51) Int. Cl.⁵ : **H01M 4/00,** C25B 11/04,
C23F 13/02, H01M 4/96,
H01M 4/66

(21) Anmeldenummer : **89890075.8**

(22) Anmeldetag : **15.03.89**

(54) **Elektrode.**

(30) Priorität : **15.03.88 AT 703/88**

(43) Veröffentlichungstag der Anmeldung :
**20.09.89 Patentblatt 89/38**

(45) Bekanntmachung des Hinweises auf die
Patenterteilung :
**02.11.94 Patentblatt 94/44**

(84) Benannte Vertragsstaaten :
**BE CH DE ES FR GB GR IT LI LU NL SE**

(56) Entgegenhaltungen :
**EP-A- 0 244 626
EP-A- 0 280 427
DE-A- 2 009 814
FR-A- 1 261 704
FR-A- 2 123 410
GB-A- 2 000 363
US-A- 3 193 412
US-A- 3 423 247
US-A- 3 629 007**

(56) Entgegenhaltungen :
**US-A- 4 135 039
PATENT ABSTRACTS OF JAPAN, Band 11, Nr.
145 (E-505)[2592], 12. Mai 1987; & JP-A-61 284
059
PATENT ABSTRACTS OF JAPAN, Band 9, Nr.
85 (E-308)[1808], 13. April 1985; & JP-A-59 215
668**

(73) Patentinhaber : **Steininger, Karl-Heinz,
Dipl.-Ing.Dr.techn.
Präbachweg 12
A-8301 Lassnitzhöhe (AT)**

(72) Erfinder : **Steininger, Karl-Heinz,
Dipl.-Ing.Dr.techn.
Präbachweg 12
A-8301 Lassnitzhöhe (AT)**

(74) Vertreter : **Piso, Eberhard, Dr. et al
Patentanwälte
Barger, Piso & Partner
Postfach 333
A-1011 Wien (AT)**

EP 0 333 700 B1

## Beschreibung

Die Erfindung betrifft eine in einem Elektrolyten polarisierbare Elektrode, bestehend aus einem elektrisch hochleitfähigen Leiter, vorzugsweise aus Metall oder aus Kohlenstoff aus einer inneren, dem Leiter unmittelbar benachbarten Schicht aus einem gegebenenfalls Füllstoffe, wie Graphit oder Ruß enthaltenden, elektrisch leitfähigen Kunststoffmaterial hoher Beständigkeit gegenüber dem Elektrolyten und aus einer äußeren, dem Elektrolyten zugewandten Schicht aus einem elektrochemisch aktiven, unter Einwirkung des Elektrolyten strukturverändernden Kunststoffmaterial.

Derartige Elektroden sind bereits bekannt und werden in elektrochemischen Prozessen, beispielsweise zur Synthese von Stoffen, zur Elektrolyse, in galvanischen Zellen zur Energiespeicherung, als Sensoren, zum Korrosionsschutz u. dgl. verwendet.

Hierbei besteht die Forderung, daß beim Einsatz der Elektrode in einem Elektrolyten über eine bestimmte vorgegebene Mindestlebensdauer ein Mindeststromübergang zum Elektrolyten gegeben ist. Dieser Wert wird in mA/cm² angegeben. Außerdem muß über diese bestimmte, vorgegebene Lebensdauer ein vorgegebener Stromumsatz gewährleistet sein, dessen Wert in mAh/cm² festgelegt ist.

Diese Werte werden beim Einsatz in einem bestimmten Elektrolyten durch Auswahl geeigneter Werkstoffe erzielt. Hierbei spielen natürlich auch die Materialkosten eine wesentliche Rolle. Um diese Kosten zu reduzieren, ist man in letzter Zeit dazu übergegangen, für viele Anwendungsgebiete Elektroden zu verwenden, die aus einem elektrisch hochleitfähigen Leiter, vorzugsweise aus Metall oder aus Kohlenstoff bestehen, der mit einem Kunststoff ummantelt ist, welcher durch Zusatzstoffe elektrisch leitfähig gemacht wurde.

Da derartige Elektroden für die meisten Anwendungsgebiete eine zu geringe aktive Oberfläche des Kunststoffmantels aufweisen, um den erforderlichen Mindeststromdurchgang und Stromumsatz über die vorgegebene Lebensdauer zu gewährleisten, wurde bereits vorgeschlagen, die Oberfläche des Kunststoffmantels durch eine entsprechende Gestaltung, beispielsweise durch Aufrauhen, oder durch Anbringung einer zusätzlichen Aktivschicht, zu verbessern, welche mit geringen Anteilen an Bindemitteln und einem hohen Anteil einer elektrisch leitfähigen Komponente in einer Form aufgebracht wird, die eine Vergrößerung der aktiven Oberfläche der Elektrode bei noch annehmbarem Haftvermögen gewährleistet. Befriedigende Ergebnisse ließen sich jedoch mit diesen bekannten Elektroden nicht erzielen.

Die DE-A-2009814 offenbart eine bipolare Elektrode für elektrochemische Zellen, welche aus einer Metallfolie, einer Haftschicht aus einem Polymer oder Copolymer von Isobutylen und einer weiteren Schicht aus dem Copolymer von Äthylen und Vinylacetat besteht, wobei beide Schichten elektronisch leitende Teilchen enthalten.

Die vorliegende Erfindung hat sich zur Aufgabe gestellt, eine stabile und hochaktive Elektrode für einen elektrochemischen Einsatz zu schaffen, welche bei geringen Materialkosten den erforderlichen Mindeststromübergang und den erforderlichen Stromumsatz während der gesamten vorgegebenen Lebensdauer garantiert. Zur Lösung dieser Aufgabe schlägt die Erfindung vor, daß die mindestens zwei am bzw. um den Leiter angeordneten Schichten einander vollständig überdecken, daß die innere Schicht den elektrisch hochleitfähigen Leiter dicht ummantelt und daß die innere Schicht aus unpolarem Kunststoff, wie Polyäthylen, Polypropylen oder Mischungen hiervon und die äußerste Schicht aus polarem Kunststoff, wie Äthylenvinylacetat, Hart- und Weichpolyvinylchlorid, Acrylnitril-Butadien-Styrol-Terpolymer, chloriertem Polyäthylen, Nitrilkautschuk, Styrol-Butadien-Kautschuk, Halogenelastomeren oder aus Mischungen hiervon bestehen. Bei einer solchen Elektrode verliert die innere Schicht weder durch elektrochemische noch durch chemische Einflüsse ihre geschlossene Struktur und gewährleistet somit einen Schutz des elektrisch hochleitfähigen Leiters gegen elektrochemischen oder chemischen Angriff, wobei jedoch die Verbindung zur äußersten Schicht erhalten bleibt, während die äußerste Schicht durch die an der Oberfläche stattfindenden chemischen und elektrochemischen Vorgänge ihre geschlossene Struktur verliert und auf ein größeres Volumen aufgeweitet wird. Die dadurch erreichte Porosität dieser äußersten Schicht vergrößert die wirksame Oberfläche der Elektrode und begünstigt dadurch einen verstärkten elektrochemischen Umsatz an der Elektrode.

Zweckmäßig weist die erfindungsgemäße Elektrode zwei Schichten, nämlich eine innere und eine äußere Schicht auf, es können jedoch zwischen dieser inneren und äußeren Schicht noch zusätzliche Schichten aus einem elektrisch leitfähigen Kunststoffmaterial vorgesehen sein.

Die erfindungsgemäß ausgebildete Elektrode eignet sich besonders für einen Einsatz bei elektrochemischen und elektrokinetischen Verfahren, wie Elektrolyse, Elektrophorese und Elektroosmose, sowie als Sensor und zum Korrosionsschutz von Metallen.

Die erfindungsgemäße Elektrode ist weiters für die der jeweils gewählten Anwendung notwendige Spannung polarisierbar, auch wenn diese Spannung über der theoretischen Elektrolysespannung von 1,23 Volt liegt oder ein Vielfaches dieser Spannung ausmacht.

Die Beimengungen, mittels welchen die elektrische Leitfähigkeit des die Schichten bildenden Kunststoffmaterials erzielt wird, sind so zu wählen, daß sie weitgehend beständig gegen oxidativen Abbau und gegen Intercalation von Anionen sind und ihre Leitfähigkeit unter Elektrolysebedingungen weitgehend beibehalten.

Als solche Beimengungen können auch Metallteilchen verwendet werden, jedoch ist die Verwendung solcher Metallteilchen schon aus Kostengründen nicht zweckmäßig. Dem die beiden Schichten bildenden Kunststoffmaterial können zur Erzielung der elektrischen Leitfähigkeit auch Ruß, Graphitpulver, Kohlefasern, Graphitfasern oder Mischungen hiervon beigemengt werden. Nach einem weiteren Merkmal der Erfindung besteht jedoch das die beiden Schichten bildende Kunststoffmaterial zur Erzielung der elektrischen Leitfähigkeit teilweise aus intrinsisch leitfähigen Polymeren.

Die Zusammensetzung der Schichten soll hierbei so gewählt werden, daß der Mischungsanteil der leitfähigen Komponente zu den schlecht oder nicht leitenden Kunststoffkomponenten ein solcher ist, daß für beide Schichten gemeinsam ein spezifischer Widerstand zwischen 1 und 1000 Ohm/cm erreicht wird. Um dies zu gewährleisten, enthält gemäß einem weiteren Merkmal der Erfindung das die Schichten bildende Kunststoffmaterial Beimengungen zur Erzielung der elektrischen Leitfähigkeit in einem Anteil zwischen 5 und 70 Vol.-%, vorzugsweise von etwa 20 Vol.-%.

Ein Merkmal der Erfindung ist schließlich, daß der elektrisch hochleitfähige Leiter aus einem flächigen Material, vorzugsweise aus einem Gitter, beispielsweise aus einem Streckmetallgitter, oder aus einem Gewebe besteht; dabei soll seine kontaktgebende Oberfläche so groß wie möglich sein. Der Querschnitt des Leiters ist der jeweilig auftretenden Stromstärke anzupassen.

Eine einfache Herstellung der erfindungsgemäßen Elektrode ergibt sich dann, wenn die beiden aus Kunststoff bestehenden Schichten im Extrusionsverfahren, im Spritzgießen oder durch Heißpressen auf den elektrisch hochleitfähigen Leiter aufgebracht sind. Es können dann für die Herstellung der erfindungsgemäßen Elektrode bekannte übliche Kunststoffverarbeitungsmaschinen verwendet werden. Die gemischte und homogenisierte Kunststoffmasse kann als Zwischenprodukt granuliert werden oder unmittelbar formgebend verarbeitet werden.

Optimale Ergebnisse werden dann erzielt, wenn die Dicke jeder der aus Kunsstoff bestehenden Schichten zwischen 0,2 und 5 mm beträgt.

Die erfindungsgemäße Elektrode kann sowohl als unbegrenzt lange Bandelektrode als auch als flächige und bipolare Elektrode hergestellt werden.

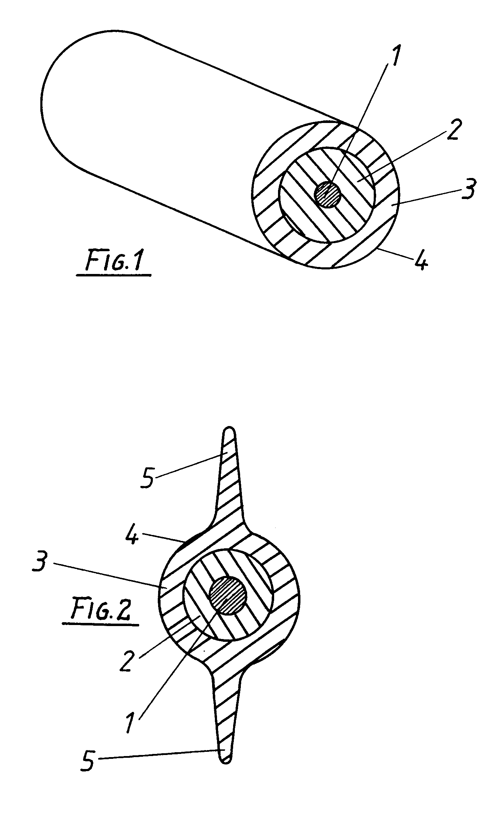

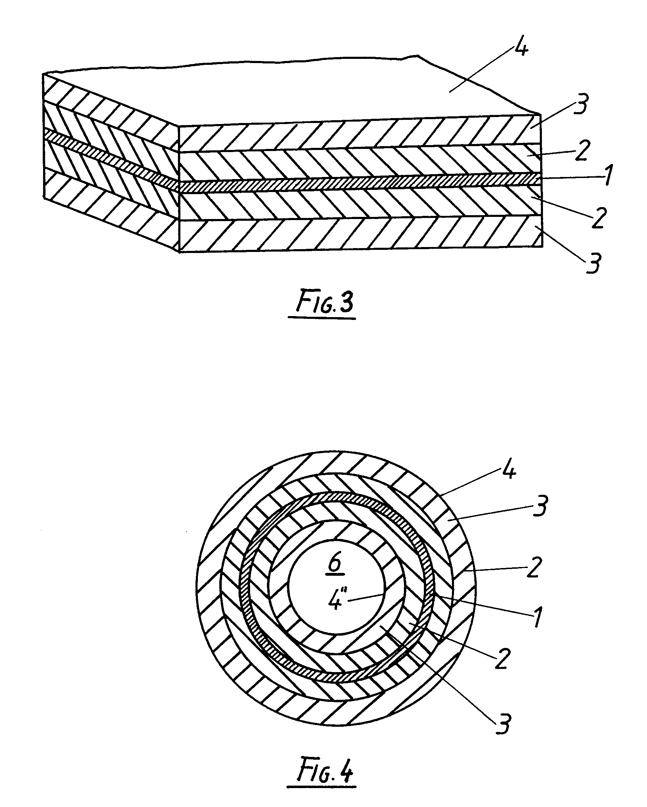

In der Zeichnung ist die Erfindung an Hand von Ausführungsbeispielen schematisch veranschaulicht. Fig. 1 zeigt in perspektivischer Darstellung eine zylinderförmige Elektrode mit einem elektrisch hochleitfähigen Leiter mit kreisförmigem Querschnitt. Fig. 2 stellt eine Abwandlung der Elektrode nach Fig. 1 mit vergrößerter Arbeitsfläche dar. Fig. 3 zeigt eine plattenförmige Elektrode mit einem elektrisch hochleitfähigen Leiter, der beidseitig vom Kunststoffmaterial abgedeckt ist. Fig. 4 stellt im Querschnitt eine hohlzylindrische Elektrode dar, wobei der elektrisch hochleitfähige Leiter beidseitig von einem Kunststoffmaterial abgedeckt ist.

Die erfindungsgemäße Elektrode besteht aus einem elektrisch hochleitfähigen Leiter 1 aus Metall oder aus Kohlenstoff, der von einer inneren Schicht 2 aus einem elektrisch leitfähigen Kunststoffmaterial und aus einer äußeren Schicht 3 aus einem elektrisch leitfähigen Kunststoffmaterial abgedeckt ist, deren Oberfläche 4 die wirksame Arbeitsfläche der Elektrode bildet. Zur Erzielung der elektrischen Leitfähigkeit beider Kunststoffschichten 2, 3 sind dem Kunststoffmaterial Ruß, Graphitpulver, Kohlefasern, Graphitfasern oder Mischungen hiervon beigemengt. Es kann aber auch eine Beimengung von intrinsisch leitfähigen Polymeren erfolgen.

Die innere Schicht 2, welche den elektrisch hochleitfähigen Leiter 1 umgibt, besteht aus einem überwiegend unpolaren Kunststoffmaterial, welches bei den stattfindenden elektrochemischen Vorgängen seine geschlossene und dichte Struktur nicht verliert und somit einen Schutz des elektrisch hochleitfähigen Leiters 1 gegen elektrochemische oder chemische Einflüsse gewährleistet, jedoch die notwendige elektrische Verbindung zwischen dem elektrisch hochleitfähigen Leiter 1 und der äußeren Schicht 3 sicherstellt.

Diese äußere Schicht 3 hingegen besteht aus einem überwiegend polaren Kunststoffmaterial, welches derart beschaffen ist, daß es durch die an der Oberfläche 4 stattfindenden elektrochemischen Vorgänge seine geschlossene Struktur verliert und sich auf ein größeres Volumen aufweitet, wobei durch die dabei entstehende Porosität die wirksame äußere und innere Oberfläche vergrößert und dadurch der elektrochemische Umsatz an der Elektrode verstärkt wird.

Die Ausführungsform nach Fig. 2 unterscheidet sich von der Ausführungsform nach Fig. 1 dadurch, daß die äußere Schicht 3 mit abstehenden Flügeln 5 versehen ist, wodurch die wirksame Arbeitsfläche der Elektrode vergrößert wird.

Fig. 3 zeigt eine Ausführungsform, bei welcher der aus einem flächigen Material bestehende elektrisch hochleitfähige Leiter 1 beidseitig von den beiden Schichten 2,3 bedeckt und daher, ebenso wie bei der Ausführungsform nach den Fig. 1 und 2, vollständig ummantelt ist.

Fig. 4 zeigt eine hohlzylindrische Elektrode. Der zylinderförmige, elektrisch hochleitfähige Leiter 1 ist hierbei beidseitig von zylindrischen Schichten 2,3 aus einem elektrisch leitfähigen Kunststoffmaterial umgeben und daher gleichfalls vollständig ummantelt. Der Elektrolyt umgibt nicht nur die äußere Oberfläche 4', sondern durchströmt auch den zylindrischen Hohlraum 6 und steht daher auch mit der inneren Oberfläche 4" in Berührung.

Im folgenden werden an Hand eines Beispieles die Werte bekannter Elektroden mit den Werten der erfindungsgemäßen Elektrode verglichen. Die Prüfung der Stabilität der Elektroden erfolgte hierbei unter Elektrolysebedingungen in einem NaCl-Elektrolyten (5 %) unter galvanostatischen Bedingungen (Gleichstrom mit 1mA/cm$^2$). Nach jeweils 50 Betriebsstunden wurde eine Strom-Spannungskurve mit und ohne Kompensation des Ohm'schen Spannungsabfalles aufgenommen.

Zur Herstellung der erfindungsgemäßen Elektrode wurden in einem Extruder für die Herstellung der äußeren Schicht ein Äthylenvinylacetat-Copolymer mit 25% Ruß gemischt, plastifiziert und granuliert.

Die innere Schicht wurde aus einer Mischung aus Niederdruck-Polyäthylen und Ruß ebenso wie die äußere Schicht in einem Extruder granuliert.

Anschließend wurde um einen aus Kupfer bestehenden elektrisch hochleitfähigen Leiter zunächst die innere Schicht kontinuierlich extrudiert, wobei auf eine gleichmäßige Schichtdicke von 1,5 mm geachtet wurde. In einem zweiten Arbeitsgang wurde dann auf die innere Schicht die äußere Schicht in einer Dicke von 2 mm extrudiert.

Als Vergleichselektroden wurden Einschichtelektroden gleicher Form hergestellt, wobei die erste Vergleichselektrode aus einem Kupferleiter bestand, der mit einer einzigen Schicht aus einem elektrisch leitfähigen Kunststoffmaterial ummantelt wurde, welches Kunststoffmaterial der äußeren Schicht der erfindungsgemäßen Elektrode entsprach. Die zweite Vergleichselektrode wurde in gleicher Weise mit derselben Schichtdicke hergestellt, wobei jedoch das elektrisch leitfähige Kunststoffmaterial jenem entsprach, das für die Herstellung der inneren Schicht der erfindungsgemäßen Elektrode verwendet wurde.

Die Vergleichselektroden wurden als Schleife in einen Elektrolyten getaucht, die Enden kontaktiert und in der oben beschriebenen Weise getestet.

In den folgenden Tabellen sind die Testergebnisse enthalten.

Erfindungsgemäße Elektrode

| | Summe mAh/cm$^2$ | Spannung in Volt gegen Referenz-Elektrode (Ag/AgCl) | Ri Ohm | Beobachtungen |
|---|---|---|---|---|
| 1 | 0 | 5,5 | 600 | optisch unverändert |
| 2 | 100 | 3,8 | 320 | leichtes Aufrauhen der Oberfläche |
| 3 | 200 | 3,2 | 270 | Aufquellen und verstärktes Aufrauhen der Aktivschichte |
| 4 | 300 | 3,2 | 275 | wie 3 |
| 5 | 400 | 3,2 | 280 | verstärktes Aufquellen, Volumszunahme 2x |

| | Summe mAh/cm$^2$ | Spannung in Volt gegen Referenz-Elektrode (Ag/AgCl) | Ri Ohm | Beobachtungen |
|---|---|---|---|---|
| 6 | 500 | 3,3 | 280 | wie 5 |
| 7 | 600 | 3,3 | 280 | wie 5 |
| 8 | 700 | 3,3 | 290 | wie 5 |
| 9 | 800 | 3,5 | 310 | wie 5 |
| 10 | 900 | 4,0 | 390 | geringe Mengen von Kupfer in Lösung |
| 11 | 1000 | 6,2 | 580 | Versuchsabbruch, Zuleitung wird abgebaut |

Die erfindungsgemäße Elektrode wurde hierbei als Anode unter Elektrolysebedingungen geschaltet. Die Kathode derselben Konstruktion zeigte über die gesamte Versuchsdauer keine nennenswerten Veränderungen ihres Aussehens und ihrer Eigenschaften.

Erste Vergleichselektrode:

| | Summe mAh/cm$^2$ | Spannung in Volt gegen Referenz-Elektrode (Ag/AgCl) | Ri Ohm | Beobachtungen |
|---|---|---|---|---|
| 1 | 0 | 5,4 | 590 | optisch unverändert |
| 2 | 100 | 3,9 | 330 | leichtes Aufrauhen der Oberfläche |
| 3 | 200 | 3,3 | 280 | Aufquellen und verstärktes Aufrauhen der Schichte |
| 4 | 300 | 3,2 | 275 | wie 3 |
| 5 | 400 | 5,0 | 490 | geringe Mengen von Kupfer in Lösung |
| 6 | 500 | 7,9 | 800 | Versuchsabbruch Zuleitung wird abgebaut |

Zweite Vergleichselektrode:

|   | $Summe_2$ mAh/cm$^2$ | Spannung in Volt gegen Referenz-Elektrode (Ag/AgCl) | Ri . Ohm | Beobachtungen |
|---|---|---|---|---|
| 1 | 0 | 5,6 | 610 | optisch unverändert |
| 2 | 100 | 4,8 | 430 | leichtes Aufrauhen der Oberfläche |
| 3 | 200 | 4,9 | 450 | wie 2 |
| 4 | 300 | 6,2 | 700 | wie 2 |
| 5 | 400 | 18,9 | 3200 | Versuchsabbruch Oberfläche inaktiv |

Auch die zweite Vergleichselektrode wurde als Anode unter Elektrolysebedingungen geschaltet.

Die Kathode derselben Konstruktion zeigte über die gesamte Versuchsdauer geringfügigen Anstieg des Ohm'schen Widerstandes und des Arbeitspotentials.

**Patentansprüche**

1. In einem Elektrolyten polarisierbare Elektrode, bestehend aus einem elektrisch hochleitfähigen Leiter (1), vorzugsweise aus Metall oder Kohlenstoff, aus einer inneren, dem Leiter (1) unmittelbar benachbarten Schicht (2) aus einem gegebenenfalls Füllstoffe, wie Graphit oder Ruß enthaltenden, elektrisch leitfähigen Kunststoffmaterial hoher Beständigkeit gegenüber dem Elektrolyten und aus einer äußeren, dem Elektrolyten zugewandten Schicht (3) aus einem elektrochemisch aktiven, unter Einwirkung des Elektrolyten strukturverändernden Kunststoffmaterial, dadurch gekennzeichnet, daß die mindestens zwei am bzw. um den Leiter (1) angeordneten Schichten (2, 3) einander vollständig überdecken, daß die innere Schicht (2) den elektrisch hochleitfähigen Leiter (1) dicht umhüllt und daß die innere Schicht (2) aus unpolarem Kunststoff, wie Polyäthylen, Polypropylen oder Mischungen hiervon und die äußerste Schicht (3) aus polarem Kunststoff, wie Äthylenvinylacetat, Hart- und Weichpolyvinylchlorid, Acrylnitril-Butadien-Styrol-Terpolymer, chloriertem Polyäthylen, Nitrilkautschuk, Styrol-Butadien-Kautschuk, Halogenelastomeren oder aus Mischungen hiervon bestehen.

2. Elektrode nach Anspruch 1, dadurch gekennzeichnet, daß das die Schichten (2, 3) bildende Kunststoffmaterial zur Erzielung der elektrischen Leitfähigkeit teilweise aus intrinsisch leitfähigen Polymeren besteht.

3. Elektrode nach einem der Ansprüche 1 oder 2, dadurch gekennzeichnet, daß das die Schichten (2, 3) bildende Kunststoffmaterial Beimengungen zur Erzielung der elektrischen Leitfähigkeit in einem Anteil zwischen 5 und 70 Vol.-%, vorzugsweise von etwa 20 Vol.-% enthält.

4. Elektrode nach einem der Ansprüche 1 bis 3, dadurch gekennzeichnet, daß der elektrisch hochleitfähige Leiter (1) aus einem flächigen Material, vorzugsweise aus einem Gitter, beispielsweise einem Streckmetallgitter, oder aus einem Gewebe besteht.

**Claims**

1. Electrode polarisable in an electrolyte consisting of a highly electrically conductive conductor (1), preferably of metal or carbon, of an inner layer (2) directly adjacent the conductor (1) of an electrically conductive plastics material optionally containing fillers such as graphite or carbon black of high resistance with respect to the electrolyte and of an outer layer (3) turned towards the electrolyte of an electrochemically active plastics material which changes its structure under the action of the electrolyte, characterised in that the at least two layers (2, 3) arranged on or around the conductor (1) wholly overlap one another, that the inner layer (2) tightly surrounds the highly electrically conductive conductor (1) and that the inner layer (2) consists of non-polar plastics such as polyethylene, polypropylene or mixtures thereof and the outer layer (3) of polar plastics such as ethylene vinyl acetate, hard and soft polyvinyl chloride, acrylonitrile-butadiene-styrene terpolymer, chlorinated polyethylene, nitrile rubber, styrene-butadiene rubber, halogenated elastomers or of mixtures thereof.

2.  Electrode according to Claim 1, characterised in that the plastics material forming the layers (2, 3) consists for achieving the electrical conductivity partially of intrinsically conductive polymers.

3.  Electrode according to one of Claims 1 or 2, characterised in that the plastics material constituting the layers (2, 3) contains admixtures to achieve the electrical conductivity in a proportion between 5 and 70 Vol. %, preferably from around 20 Vol. %.

4.  Electrode according to one of Claims 1 to 3, characterised in that the highly electrically conductive conductor (1) consists of a high surface material, preferably of a grid, for example an expanded metal grid, or of a fabric.


**Revendications**

1.  Electrode pouvant être polarisée dans un électrolyte, constituée par un conducteur à forte conductivité électrique (1), de préférence en métal ou en carbone, par une couche intérieure (2), immédiatement voisine du conducteur (1), en une matière plastique conductrice de l'électricité qui contient le cas échéant des charges comme du graphite ou de la suie et dont la résistance à l'électrolyte est élevée, et par une couche extérieure (3) tournée vers l'électrolyte en une matière plastique électrochimiquement active dont la structure se modifie sous l'effet de l'électrolyte, caractérisée par le fait que les couches (2, 3) qui sont disposées contre le conducteur (1) ou autour de celui-ci, respectivement, sont au moins au nombre de deux et se recouvrent complètement entre elles, par le fait que la couche intérieure (2) entoure étroitement le conducteur à forte conductivité électrique (1), et par le fait que la couche intérieure (2) est constituée par une matière plastique non polaire, comme du polyéthylène, du polypropylène ou des mélanges de ceux-ci, et que la couche extérieure (3) est constituée par une matière plastique polaire, comme un polymère d'éthylène et d'acétate de vinyle, du chlorure de polyvinyle dur ou non, un terpolymère acrylnitrile-styrène-butadiène, du polyéthylène chloré, du caoutchouc nitrile, du caoutchouc au styrène-butadiène, des élastomères halogénés ou des mélanges de ceux-ci.

2.  Electrode selon la revendication 1, caractérisée par le fait qu'en vue d'obtenir la conductivité électrique, la matière plastique qui constitue les couches (2, 3) est constituée partiellement par des polymères à conductivité intrinsèque.

3.  Electrode selon l'une des revendications 1 et 2, caractérisée par le fait qu'en vue d'obtenir la conductivité électrique, la matière plastique qui constitue les couches (2, 3) contient des additions dans une proportion comprise entre 5 et 70% en volume, et de préférence égale à 20% en volume environ.

4.  Electrode selon l'une des revendications 1 à 3, caractérisée par le fait que le conducteur à forte conductivité électrique (1) est constitué par un matériau plat, et de préférence par une grille, comme par exemple une grille en métal étiré, ou par un tissu.

_FIG.1_

_FIG.2_

F<sub>IG.</sub>3

F<sub>IG.</sub>4

9